# EUROPEAN PATENT APPLICATION

(11) **EP 3 343 316 A1**
(43) Date of publication of application: **04.07.2018**
(21) Application number: 17205547.7
(22) Date of filing: 05.12.2017
(51) Int. Cl.: G06F 1/32, H04N 1/00

(54) **POWER MANAGEMENT IN AN IMAGE FORMING APPARATUS**

(30) Priority: 28.12.2016 US 201615392723
(71) Applicant: KABUSHIKI KAISHA TOSHIBA, Minato-ku Tokyo 105-8001 (JP); Toshiba TEC Kabushiki Kaisha, Tokyo 141-8562 (JP)
(72) Inventor: MEGAWA, Shunichi, Shinagawa-ku, Tokyo 141-8562 (JP)
(74) Representative: Takeuchi, Maya

(57) **Abstract**

An image forming apparatus has a plurality of power modes which have different degrees of power consumption, and comprises an operation unit configured to receive input by a user, a display unit configured to display power consumption data, a network interface which connects to a computing device and is configured to transmit the power consumption data to the computing device, a storage device configured to store an estimate of power consumption for each of the power modes, and a processor configured to determine periods of operation time for each of the power modes and output to at least one of the display unit or the computing device an actual amount of the power consumption for each of the power modes, based on the stored estimates and the period of total operation time.

## Description

### FIELD

The present invention relates to the field of image forming technologies in general, and embodiments described herein relate generally to power management in an image forming apparatus.

### BACKGROUND

In recent years, in terms of energy conservation (EC), a typical electricity consumption (TEC) value has been used as a criterion for an energy conservation performance of an image forming apparatus. The TEC value indicates "power consumption (kWh) for conceptually one week (five days in alternating operation state and sleep or off state, and two days in the sleep or off state)" in office equipment.

In the related art, the power consumption of the image forming apparatus is calculated depending on the number of printed sheets based on the TEC value. For example, the power consumption of the image forming apparatus is calculated by using a program executed in a computer connected to the image forming apparatus via a network. The program is executed to acquire the number of printed sheets from the image forming apparatus via the network and to calculate the power consumption based on the TEC value. In addition, the program is executed to notify a user of the calculated power consumption through display, printing, or the like. However, the TEC value is a unique value of the image forming apparatus. Hence, the user notified of the power consumption has no choice but to reduce the number of printed sheets in order to reduce the power consumption of the image forming apparatus.

To solve the above-cited problems, there is provided an image forming apparatus that has a plurality of power modes which have different degrees of power consumption, the apparatus comprising: an operation unit configured to receive input by a user; a display unit configured to display power consumption data; a network interface which connects to a computing device and is configured to transmit the power consumption data to the computing device; a storage device configured to store an estimate of power consumption for each of the power modes; and a processor configured to determine periods of operation time for each of the power modes and output to at least one of the display unit or the computing device an actual amount of the power consumption for each of the power modes, based on the stored estimates and the period of total operation time.

Preferably, the input by a user includes a request for changing the power mode.

Preferably, the power modes include one of operation state, ready state during which less power is consumed than the operation state, a power saving state during which less power is consumed than the ready state, a sleep state during which less power is consumed than the power saving state, and a super sleep state during which less power is consumed than the sleep state.

Preferably, the processor is further configured to collect the power consumption data separately for each of the power modes.

Preferably, the processor is further configured to detect a user input made through the operation unit to display the power consumption data and to output to the display unit the actual amount of the power consumption for each of the power modes in response to the user input.

Preferably, the sleep state is a state in which it is possible to receive a fax, but other functions are stopped.

Preferably, the super sleep state is a state in which it is possible to operate a key of the operation unit for transmission to another power mode.

The invention also relates to a power management system comprising the above image forming apparatus and a computer that is connected to the image forming apparatus via a network, wherein the computer includes a display unit, and a processor configured to calculate power consumption for each of the power modes, based on the estimates and the period of operation time acquired from the image forming apparatus and to control the display unit to display the calculated power consumption for each of the power modes.

The invention also relates to a method for monitoring power usage of an image forming apparatus that has a plurality of power modes which have different degrees of power consumption, the method comprising: storing, in the image forming apparatus, an estimate of power consumption for each of the power modes; tracking, by the image forming apparatus, an operation time for each of the power modes; computing, by the image forming apparatus, an actual amount of the power consumption for each of the power modes, based on the stored estimate and the period of total operation time; and outputting, by the image forming apparatus, for display the actual amount of the power consumption for each of the power modes, based on the stored estimate and the period of total operation time.

Preferably, the image forming apparatus includes a display unit and the actual amount of the power consumption for each of the power modes is outputted to the display unit for display thereby.

Preferably, the image forming apparatus includes a network interface connected to a computing device and the actual amount of the power consumption for each of the power modes is outputted through the network interface to the computing device for display by a display unit of the computing device.

Preferably, the power modes include one of operation state, ready state during which less power is consumed than the operation state, a power saving state during which less power is consumed than the ready state, a sleep state during which less power is consumed than the power saving state, and a super sleep state during which less power is consumed than the sleep state.

Preferably, the sleep state is a state in which it is possible to receive a fax, but other functions are stopped.

Preferably, the super sleep state is a state in which it is possible to operate a key of the operation unit for transition to another power mode.

### DESCRIPTION OF THE DRAWINGS

FIG. 1 is a diagram illustrating an example of a hardware configuration of an image forming apparatus of an embodiment.
FIG. 2 is a diagram illustrating an example of a hardware configuration of a computer of the embodiment.
FIG. 3 is a diagram illustrating an example of a software configuration of the image forming apparatus of the embodiment.
FIG. 4 is a diagram illustrating an example of a software configuration of the computer of the embodiment.
FIG. 5 is a flowchart illustrating an example of an operation of the image forming apparatus of the embodiment.
FIG. 6 is a flowchart illustrating another example of the operation of the image forming apparatus of the embodiment.
FIG. 7 is a flowchart illustrating an example of an operation of the computer of the embodiment.
FIGS. 8-16 are diagrams, each illustrating an example display of the computer of the embodiment.

### DETAILED DESCRIPTION

An image forming apparatus of an embodiment has a plurality of power modes which have different degrees of power consumption, and includes an operation unit through which user inputs are received, wherein some of the user inputs change the power mode of the image forming apparatus, a display unit on which power consumption data are to be displayed, a network interface connected to a computing device through which the power consumption data are to be transmitted to the computing device, a storage device in which an estimate of power consumption is stored for each of the power modes, and a processor configured to determine periods of operation time for each of the power modes and output to at least one of the display unit and the computing device an actual amount of the power consumption for each of the power modes, based on the stored estimates and the period of total operation time..

Hereinafter, the image forming apparatus, a power management system, a method for controlling image forming apparatus, and a storing medium of the embodiment will be described with reference to the figures. The same reference signs are assigned to the same portions in the figures.

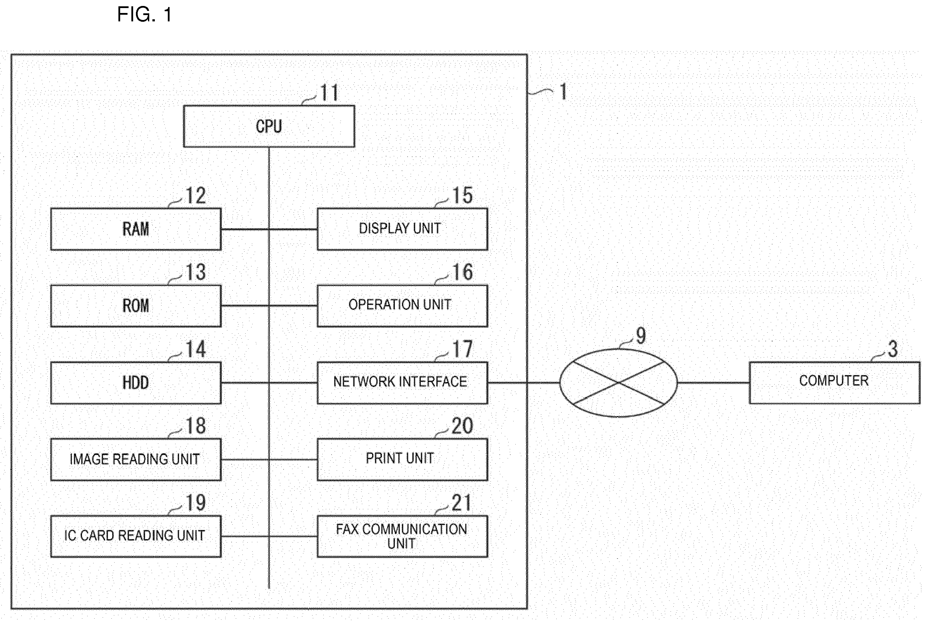

FIG. 1 is a diagram illustrating an example of a hardware configuration of the image forming apparatus of the embodiment. In FIG. 1, an image forming apparatus 1 includes a central processing unit (CPU) 11, a random access memory (RAM) 12, a read only memory (ROM) 13, a hard disk drive (HDD) 14, a display unit 15, an operation unit 16, a network interface (I/F) 17, an image reading unit 18, an IC card reading unit 19, a print unit 20, a fax communication unit 21, and a bus 22 that connects the component members.

The CPU 11 executes a program stored in the RAM 12, the ROM 13, and the HDD 14, thereby controlling the image forming apparatus 1. The CPU 11 executes a control program for realizing an operation of the image forming apparatus 1. For example, the control program for implementing the operation of the image forming apparatus 1 is acquired from a storing medium storing the control program, a server via a network, or the like.

For example, the display unit 15 is a display panel having a display function. For example, the operation unit 16 is a control panel having an input function. The display unit 15 and the operation unit 16 may be implemented by a device having a display function and an input function, such as a touch panel. The network I/F 17 controls communication with a computer 3 connected thereto via a network 9 by wired or wireless communication.

The image reading unit 18 is a scanner that reads an image on an original document. The image reading unit 18 reads images on one side or both sides of an original document stacked on a flatbed or an original document that is automatically fed from an auto document feeder (ADF), and generates image data.

The IC card reading unit 19 is a card reader that reads information of an IC card. For example, the IC card reading unit 19 may read authentication information for authentication of a user from an IC card.

The print unit 20 is a printer that forms an image on a sheet. The print unit 20 is the printer in which toner is fixed on the sheet by a fixing device. The fixing device has a heat source such as a halogen lamp or an induction heating (IH) type heater. The heat source consumes power when heating the fixing device. For example, the print unit 20 may be a printer that is capable of erasing a printed image.

The fax communication unit 21 controls fax communication. For example, since the fax communication unit 21 receives a fax even at night, the fax communication unit consumes power to detect reception of the fax.

Configurations of the image forming apparatus 1 described above have power states that are individually changed depending on power modes which will be described below. The change of the power state means a change, for example, between a normal power supply state or a power saving state in which power consumption is low compared to the normal power supply state.

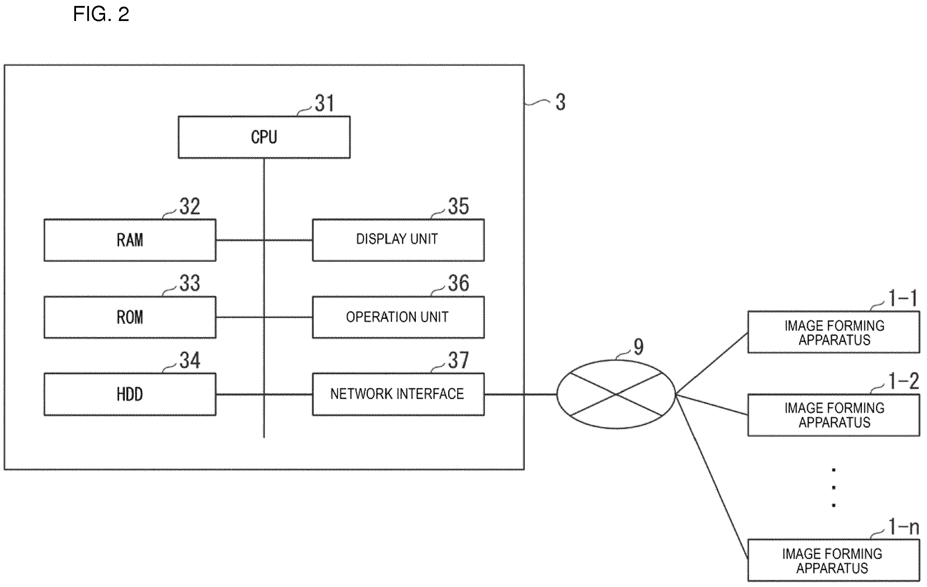

FIG. 2 is a diagram illustrating an example of a hardware configuration of the computer of the embodiment. In FIG.2, the computer 3 includes a CPU 31, a RAM 32, a ROM 33, a HDD 34, a display unit 35, an operation unit 36, a network I/F 37, and a bus 38 that connects the component members.

The CPU 31 executes a program stored in the RAM 32, the ROM 33, and the HDD 34, thereby controlling the computer 3. The CPU 31 executes a control program for implementing an operation of the computer 3. For example, the control program for implementing the operation of the computer 3 is acquired from a storing medium storing the control program, a server via a network, or the like.

For example, the display unit 35 is a liquid crystal display panel having a display function. For example, the operation unit 36 is a device such as a keyboard or a mouse which has an input function. The display unit 35 and the operation unit 36 may be implemented by a device having a display function and an input function, such as a touch panel.

The network I/F 37 controls communication with the image forming apparatus 1 connected thereto via the network 9 by wired or wireless communication. The network I/F 37 controls communication with any number of the image forming apparatuses 1 via the network 9. FIG. 2 illustrates a state in which the computer 3 is connected to n image forming apparatuses 1 of an image forming apparatus 1-1 to an image forming apparatus 1-n.

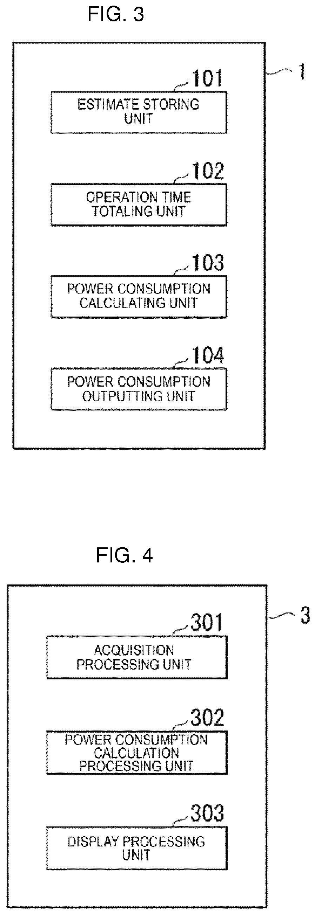

FIG. 3 is a diagram illustrating an example of a software configuration of the image forming apparatus 1 of the embodiment. The image forming apparatus 1 carries out functions of an estimate storing unit 101, an operation time totaling unit 102, a power consumption calculating unit 103, and a power consumption outputting unit 104.

The estimate storing unit 101 stores an estimate of power consumption set in advance for each power mode. The power modes mean operation modes of the image forming apparatus 1, which have different degrees of power consumption. In the embodiment, examples of the power modes include an "operation state", a "ready state", a "power saving state", a "sleep state", and a "super sleep state". Details of the power modes will be described below. In addition, an estimate is a value of power consumption which is estimated in each of the power modes. For example, the estimate is an average value of the power consumption in each of the power modes, which is actually measured in advance for each model of the image forming apparatus 1. For example, the estimate storing unit 101 acquires the estimate via the network 9 described in FIG. 1, and stores the estimate in the HDD 14. The estimate storing unit 101 may change the stored estimate to an acquired new value.

The operation time totaling unit 102 totals periods of operation time for each power mode. The operation time totaling unit 102 calculates the period of operation time from a difference between a time point at which each power mode starts and a time point at which the power mode ends. The operation time totaling unit 102 adds the calculated period of operation time to the total period of past operation time in the power mode, thereby totaling the periods of operation time. The operation time totaling unit 102 may store the number of transitions to the power mode, in addition to a period of total time of the power mode. In the embodiment, information of the number of the transitions to the power mode may be contained in the period of operation time for each power mode.

The power consumption calculating unit 103 acquires the estimate stored in the estimate storing unit 101. In addition, the power consumption calculating unit 103 acquires the period of total operation time calculated by the operation time totaling unit 102. The power consumption calculating unit 103 calculates power consumption for each power mode, based on the acquired estimate and the acquired period of operation time. For example, even in a case where the same number of sheets are printed, the power consumption varies depending on the period of operation time of the power mode which is not taken for printing. The power consumption calculating unit 103 calculates power consumption, based on the acquired estimate and the acquired period of operation time for each power mode. The power consumption calculating unit 103 can calculate the power consumption with accuracy, compared to a case where the power consumption is calculated based on the number of printed sheets.

The power consumption outputting unit 104 outputs an actual amount of the power consumption for each power mode, to at least one of the computer 3 and the display unit 15. For example, the actual amount of the power consumption for each power mode is, for example, the power consumption for each power mode which is calculated in the power consumption calculating unit 103. The actual amount of the power consumption for each power mode may be at least one of the estimate and the period of operation time for each power mode. The power consumption outputting unit 104 may output, to the computer 3, the information of the actual amount of power consumption including identification information for identifying the image forming apparatus 1. As described in FIG. 2, the computer 3 is connected to a plurality of image forming apparatuses 1 via a network and acquires the actual amount from the image forming apparatuses 1. The identification information is included in the information of the actual amount, and thereby the computer 3 can identify the image forming apparatus 1 from which the information of the actual amount is acquired.

The power consumption outputting unit 104 can convert, according to an output destination, a data format of the information of the actual amount. For example, in a case where the actual amount is output to the display unit 15, the power consumption outputting unit 104 converts the information of the actual amount into display data that is displayable on the display unit 15. In addition, in a case where the actual amount is output to the computer 3, the power consumption outputting unit 104 may convert the information of the actual amount into a data format that is usable in the SOAP communication.

It is possible to implement, by software, functions of the estimate storing unit 101, the operation time totaling unit 102, the power consumption calculating unit 103, and the power consumption outputting unit 104. In such cases, the CPU 11 executes the software to carry out the functions of the estimate storing unit 101, the operation time totaling unit 102, the power consumption calculating unit 103, and the power consumption outputting unit 104. However, at least one function of the functions may be implemented by hardware. In addition, two or more functions of the functions may be implemented as one functional unit. In addition, one function of the functions may be divided into a plurality of functions and the plurality of functions may be implemented.

FIG. 4 is a diagram illustrating an example of a software configuration of the computer 3 of the embodiment. The computer 3 includes an acquisition processing unit 301, a power consumption calculation processing unit 302, and a display processing unit 303. All of these units are implemented in software that is executed by the CPU 31. The CPU 31 executes the software corresponding to each of these units to carry out their respective functions.

The acquisition processing unit 301 acquires information of an estimate and a period of operation time for each power mode from the image forming apparatus 1. For example, the acquisition processing unit 301 requests acquisition of the estimate and the period of operation time for each power mode to the image forming apparatus 1. The acquisition processing unit 301 acquires the information thereof which is output from the image forming apparatus 1 in response to the request. When the acquisition processing unit 301 acquires the information, the acquisition processing unit 301 also acquires identification information of the image forming apparatus which is included in the information described above. In a case where the estimate for each power mode according to the image forming apparatus 1 is known in advance, the acquisition processing unit 301 may acquire a period of operation time for each power mode.

The power consumption calculation processing unit 302 calculates the power consumption for each power mode, based on the estimate and the period of operation time acquired in the acquisition processing unit 301. The power consumption calculation processing unit 302 calculates the power consumption for each image forming apparatus 1, based on the acquired identification information. The power consumption calculation processing unit 302 calculates the power consumption for each power mode based on the estimate and the period of operation time, thereby making it possible to calculate the power consumption with accuracy. The case where the power consumption is calculated also in the image forming apparatus 1 was described above. The power consumption is calculated in the power consumption calculation processing unit 302, and thereby, for example, it is possible to set calculation conditions of the power consumption into the computer 3. The power consumption calculation processing unit 302 may acquire information of a temperature change of the fixing device, a type of sheet, or the like, in addition to the information of the estimate and the period of operation time, and the acquired information may be used as the calculation conditions of the power consumption.

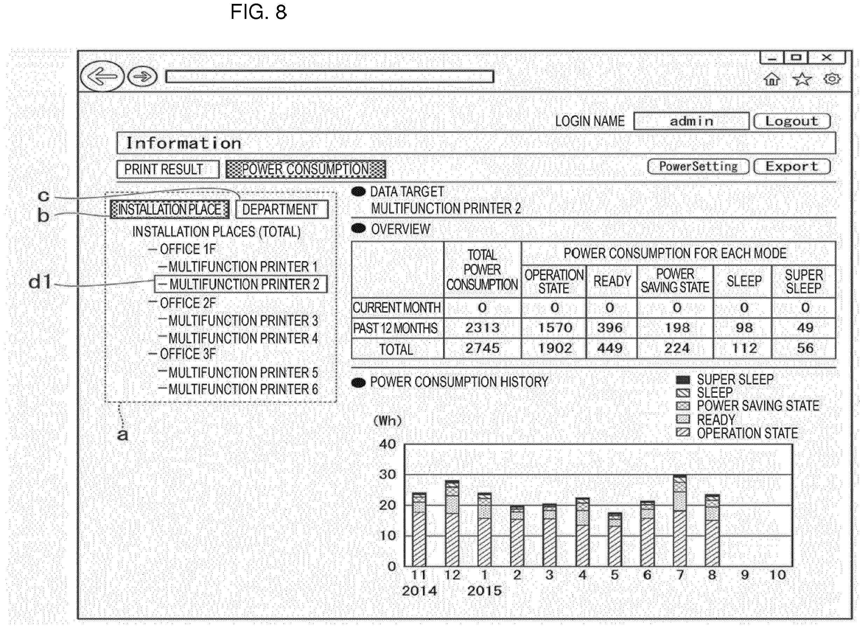

The display processing unit 303 displays the power consumption for each power mode calculated in the power consumption calculation processing unit 302. The display processing unit 303 may display the power consumption for each power mode calculated in the power consumption calculating unit 103 of the image forming apparatus 1. The display processing unit 303 generates display data that is displayed on the display unit 35, based on the information of the power consumption for each power mode. An example of a display screen of the display data that is generated in the display processing unit 303 and is displayed on the display unit 35 will be described below with reference to FIG. 8.

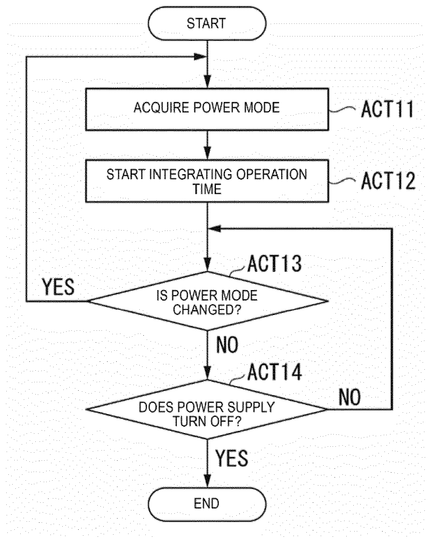

FIG. 5 is a flowchart illustrating an example of an operation of the image forming apparatus 1 of the embodiment. The operation of the image forming apparatus 1 depicted in FIG. 5 represents an operation performed by the operation time totaling unit 102 depicted in FIG.3.

In FIG. 5, the operation time totaling unit 102 acquires a current power mode (ACT111). For example, the operation time totaling unit 102 reads information of a flag indicating a current power mode which is recorded in the RAM 12 in FIG. 1, thereby acquiring the power mode.

After executing the process in ACT11, the operation time totaling unit 102 starts integrating periods of operation time in the acquired power mode (ACT12). For example, the operation time totaling unit 102 acquires a time point from a real-time clock (RTC) installed in the image forming apparatus 1 and operates an integration timer for each power mode. The operation time totaling unit 102 starts the operation of the integration timer of the current power mode and stops integration timers other than the current power mode. In this manner, the operation time totaling unit 102 can integrate the periods of operation time for each power mode.

After executing the process in ACT12, the operation time totaling unit 102 determines whether or not there is a change in the power mode (ACT 13). For example, the operation time totaling unit 102 reads information of the flag indicating the current power mode which is recorded in the RAM 12, and stores the power mode. The operation time totaling unit 102 can compare the stored power mode with a newly read power mode and can determine that there is a change in the power mode when there is a difference between both of the power modes.

In a case where the operation time totaling unit 102 determines that there is no change in the power mode (ACT13: NO), the operation time totaling unit 102 determines whether or not a power supply turns OFF (ACT14). For example, the operation time totaling unit 102 reads information of a flag indicating that the power supply turns OFF which is recorded in the RAM 12, thereby making it possible to determine that the power supply turns OFF.

In a case where the operation time totaling unit 102 determines that the power supply does not turn OFF (ACT14: NO), the operation time totaling unit 102 executes the process in ACT 13 again. In addition, in a case where the operation time totaling unit 102 determines that the power supply turns OFF (ACT14: YES), the process of the flowchart in FIG. 5 is ended.

On the other hand, in a case where, in the process in ACT13, the operation time totaling unit 102 determines that there is a change in the power mode (ACT13: YES), the operation time totaling unit 102 executes the process in ACT11 again. In other words, the operation time totaling unit 102 acquires a new power mode (ACT11), and starts integrating periods of operation time of the new power mode (ACT12).

Through the processes described above, the operation time totaling unit 102 can integrate the periods of operation time for each power mode.

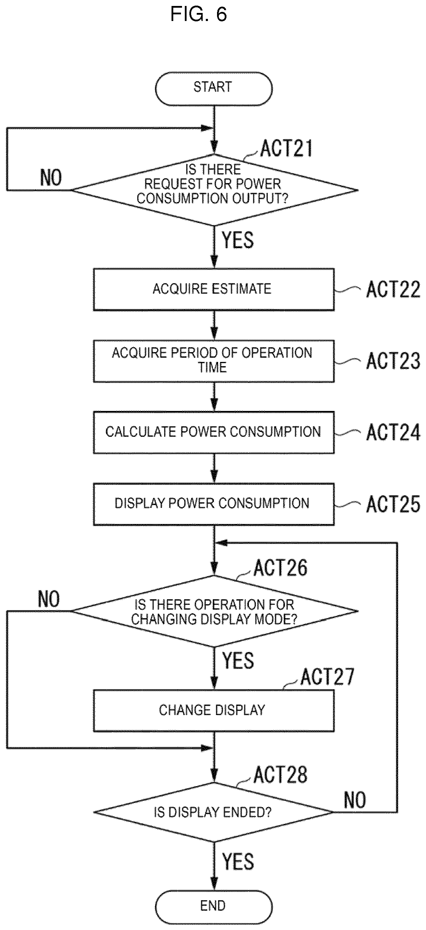

FIG. 6 is a flowchart illustrating another example of the operation of the image forming apparatus 1 of the embodiment. The operation of the image forming apparatus 1 depicted in FIG. 6 represents operations performed by the power consumption calculating unit 103 and the power consumption outputting unit 104 depicted in FIG.3.

In FIG. 6, the power consumption calculating unit 103 determines whether or not there is a power consumption output request (ACT21). For example, the power consumption output request is issued through an operation of the operation unit 16 when a user wants to display information of the power consumption on the display unit 15 in FIG. 1. For example, the power consumption calculating unit 103 monitors the operation of the operation unit 16, thereby determining whether or not there is a power consumption output request.

In a case where the power consumption calculating unit 103 determines that there is no power consumption output request (ACT21: NO), the power consumption calculating unit 103 repeatedly performs the process in ACT21 and stands by for the issue of the power consumption output request.

On the other hand, in a case where the power consumption calculating unit 103 determines that there is a power consumption output request (ACT21: YES), the power consumption calculating unit 103 acquires an estimate of the power consumption (ACT22). The estimate of the power consumption is set for each power mode and is stored by the estimate storing unit 101 in FIG. 3.

After executing the process in ACT22, the power consumption calculating unit 103 acquires a period of operation time for each power mode (ACT23). The periods of operation time for each power mode are totaled for each power mode by the operation time totaling unit 102.

After executing the process in ACT23, the power consumption calculating unit 103 calculates the power consumption for each power mode, based on the estimate and the period of operation time (ACT24). The estimate is acquired in the process in ACT22. The period of operation time is acquired in the process in ACT23.

After executing the process in ACT24, the power consumption outputting unit 104 displays, on the display unit 15 in FIG. 1, the power consumption for each power mode calculated in the process in ACT24 (ACT25). The power consumption outputting unit 104 displays the power consumption for each power mode of the image forming apparatus 1 as the corresponding apparatus. Here, the power consumption outputting unit 104 may display power consumption for each power mode of another image forming apparatus 1 connected thereto via the network 9.

After executing the process in ACT25, the power consumption outputting unit 104 determines whether or not there is an operation for changing a display mode (ACT26). For example, the operation for changing the display mode is performed through the operation of the operation unit 16 by a user. The power consumption outputting unit 104 monitors the operation of the operation unit 16, thereby making it possible to determine whether or not there is an operation for changing the display mode.

In a case where the power consumption outputting unit 104 determines that the operation for changing the display mode is performed (ACT26: YES), the power consumption outputting unit 104 changes the display mode (ACT26). For example, the change of the display mode is a change between a display for each month and a display for each week, in a display of an amount of power for each power mode. The change of the display mode may be a change between a display of an amount of power for each power mode and a display of a total value of amounts of power in all of the power modes.

After executing the process in ACT27, or in a case where the power consumption outputting unit 104 determines that there is no operation for changing the display mode (ACT26: NO), the power consumption outputting unit 104 determines whether or not the display is ended (ACT28). For example, the end of the display of the amount of the power for each power mode is performed through the operation of the operation unit 16 by a user. The power consumption outputting unit 104 monitors the operation of the operation unit 16, thereby making it possible to determine whether or not the display is ended.

In a case where the power consumption outputting unit 104 determines that the display is not ended (ACT28: NO), the power consumption outputting unit executes the process in ACT26 again. On the other hand, in a case where the power consumption outputting unit 104 determines that the display is ended (ACT28: YES), the process of the flowchart in FIG. 6 is ended.

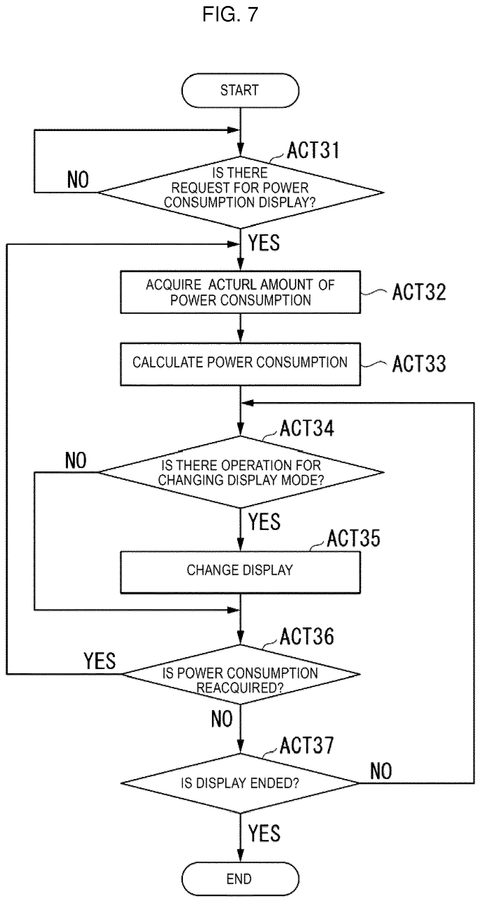

FIG. 7 is a flowchart illustrating still another example of the operation of the computer 3 of the embodiment. The operation of the computer 3 depicted in FIG. 7 represents operations performed by the acquisition processing unit 301, the power consumption calculation processing unit 302, and the display processing unit 303 depicted in FIG.4.

In FIG.7, the acquisition processing unit 301 determines whether or not there is a request for a power consumption display (ACT31). For example, the request for the power consumption display is performed through the operation of the operation unit 36 by a user. The acquisition processing unit 301 monitors the operation of the operation unit 36, thereby making it possible to determine whether or not there is a request for the power consumption display.

In a case where there is no request for the power consumption display (ACT31: NO), the acquisition processing unit 301 repeatedly performs the process in ACT31 and stands by for the request for the power consumption display.

On the other hand, in a case where the acquisition processing unit 301 determines that there is a request for power consumption display (ACT31: YES), the acquisition processing unit 301 acquires an actual amount of the power consumption from the image forming apparatus 1 (ACT32). The actual amount of the power consumption is information of the estimate and a period of operation time for each power mode in the image forming apparatus 1. The actual amount of the power consumption may be the power consumption for each power mode calculated in the image forming apparatus 1. The acquisition processing unit 301 can acquire the actual amount of the power consumption from the plurality of image forming apparatuses 1.

After executing the process in ACT32, the power consumption calculation processing unit 302 calculates the power consumption for each power mode (ACT33). The process of ACT33 may be omitted when the power consumption for each power mode calculated in the image forming apparatus 1 in the process of ACT32.

After executing the process in ACT33, the display processing unit 303 determines whether or not there is an operation for changing a display mode (ACT34). For example, the operation for changing the display mode is performed through the operation of the operation unit 36 by a user. The display processing unit 303 monitors the operation of the operation unit 36, thereby making it possible to determine whether or not there is an operation for changing the display mode. When there is a request for displaying the power consumption, the display processing unit 303 displays the power consumption for each power mode, as a result of the operation for changing the display mode.

In a case where the display processing unit 303 determines that the operation for changing the display mode is performed (ACT34: YES), the display processing unit 303 changes the display mode and displays, on the display unit 35, the power consumption for each power mode (ACT35). After performing the process in ACT35, or in a case where determining that there is no operation for changing the display mode (ACT34: NO), the display processing unit 303 determines whether or not the actual amount of the power consumption is reacquired from the image forming apparatus 1 (ACT36). For example, in a case where a user checks the amount of power based on the actual amount of the latest power consumptions, the reacquisition of an actual amount of the power consumption is performed through the operation of the operation unit 36. The display processing unit 303 monitors the operation of the operation unit 36, thereby making it possible to determine whether or not an actual amount of the power consumption is reacquired from the image forming apparatus 1.

In a case where the acquisition processing unit 301 determines that an actual amount of the power consumption is reacquired from the image forming apparatus 1 (ACT36: YES), the acquisition processing unit 301 again executes the process in ACT32 and acquires an actual amount of the power consumption from the image forming apparatus 1 (ACT32).

On the other hand, in a case where the display processing unit 303 determines that an actual amount of the power consumption is not reacquired from the image forming apparatus 1 (ACT36: NO), the display processing unit 303 determines whether or not the display is ended. (ACT37). For example, the end of display is performed through the operation of the operation unit 36 by a user. The display processing unit 303 monitors the operation of the operation unit 36, thereby making it possible to determine whether or not the display is ended.

In a case where the display processing unit 303 determines that the display is not ended (ACT37: NO), the display processing unit 303 executes the process in ACT34 again. On the other hand, in a case where display processing unit determines that the display is ended (ACT37: YES), the display processing unit 303 ends the process in the flowchart in FIG. 7.

FIGS. 8 to 16 are diagrams, each illustrating an example display of the computer 3 of the embodiment. The example display illustrated in the figure represents a display screen that is displayed on the display unit 35 in Fig. 2. In the display screen, a "multifunction printer 1" to a "multifunction printer 6" represent the image forming apparatus 1. In FIGS. 8 to 16, the same reference signs are assigned to the same display contents 1.

A display screen illustrated in FIG.8 is a display example of the power consumption for each power mode in one image forming apparatus.

In FIG. 8, a display mode switching portion a is displayed on the display screen. The display mode switching portion a includes a selection button b for "installation location" and a selection button c for a "department". The selection button in the embodiment means a region provided on the display screen, of which an operation is performed with a click of a mouse or the like.

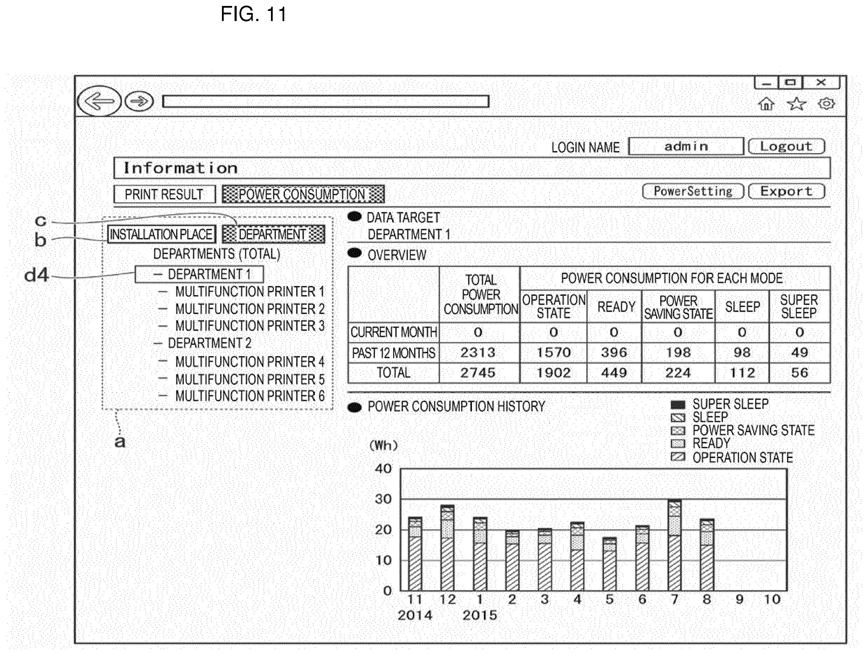

In a case where an operation is performed on the selection button b, the multifunction printers are classified and displayed for each installation location of an office. For example, a multifunction printer 1 and a multifunction printer 2 are classified and displayed as an office 1F. For example, a multifunction printer 3 and a multifunction printer 4 are classified and displayed as an office 2F. The installation location is selected by the selection button b, and thereby it is easy to control the power consumption of the multifunction printer for each installation location. The selection button c is depicted in FIG. 11.

A selection button d is a selection button for selecting each single multifunction printer. The selection button d can collectively select the multifunction printers in the same installation location. The selection button d1 is a selection button for selecting a single multifunction printer 2.

A region from the display mode switching portion a on the right side in the figure displays power consumption for each power mode of the multifunction printer selected by the display mode switching portion a. For example, FIG. 8 illustrates a display screen shown when the multifunction printer 2 is selected by a selection button d1.

A "data target" is the multifunction printer 2. The data target represents the multifunction printer that displays the power consumption. An "overview" displays power consumption for each power mode in a table format.

Examples of the power modes include an "operation state", a "ready state", a "power saving state", a "sleep state", and a "super sleep state".

The operation state means a state in which the image forming apparatus 1 executes a job. Example of the execution of a job in the multifunction printer include execution of printing, execution of scanning, execution of sending and receiving of a fax, or the like. In the operation state, mechanical portions that operate by various types of motors of the multifunction printer are driven along with the execution of jobs. Hence, the power consumption in the operation state is higher than that in other power modes.

The ready state means a state in which the image forming apparatus 1 can immediately executes a job. In the ready state, for example, a fixing temperature of the fixing device is a temperature at which it is possible to perform printing. In the ready state, since a job such as the printing is not executed, the power consumption is lower than that in the operation state.

The power saving state is a state in which the power consumption is lower than that in the ready state. In the power saving state, for example, backlight of the display unit 15 is turned off and rotation of the HDD 14 is stopped. In the power saving state, the fixing temperature may be lowered than that in the ready state. It takes about several seconds to tens of seconds to return to the ready state from the power saving state. Transition from the ready state to the power saving state is automatically performed when there is no operation on the operation unit 16 or no job is executed for a predetermined time. The transition from the ready state to the power saving state may be manually performed through an operation by a user.

The sleep state is a state in which no job is executed for a while at night or the like, and the power consumption is lower than that in the power saving state. In the sleep state, for example, it is possible to receive a fax, but other functions may be all stopped.

The super sleep state is a state in which the power consumption is lower, compared to the sleep state. In the super sleep state, it may be possible to operate only a predetermined key of the operation unit 16 for transition from the super sleep state to another power mode.

It may be possible to change the states of the multifunction printer in the power modes. In addition, it may be possible to change conditions of setting of a timer when the transition to another power mode is performed. The conditions are changed when the transition to another power mode is performed, and thereby it is possible to change the period of operation time in the power modes.

In FIG. 8, the power consumption for each power mode and a total of the power consumption in all of the power modes of the multifunction printer 2 are displayed in a table format as a total of the power consumption for the current month, past 12 months, and the entire past. In addition, the power consumption for each month for each power mode in the recent one year of the multifunction printer 2 is displayed in a type of a bar graph. Such a display enables a user to visually recognize (achieves "visualization" of) the power consumption of the multifunction printer 2.

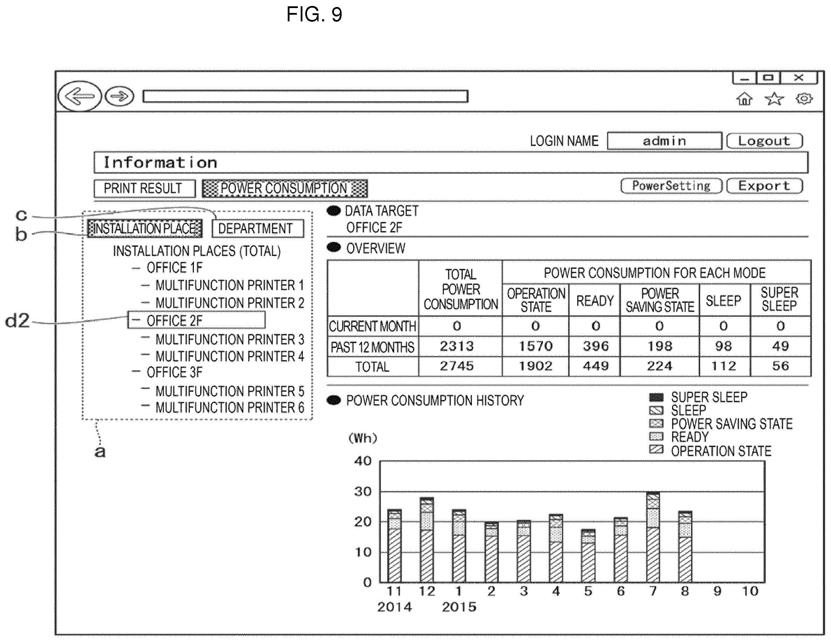

A display screen illustrated in FIG.9 is a display example of the power consumption for each power mode in one image forming apparatus installed in a selected installation place.

In FIG. 9, a selection button d2 is a selection button for selecting the "office 2F" as the installation place of the multifunction printer. When the "office 2F" is selected by the selection button d2, the power consumption for each power mode in the multifunction printer 3 and the multifunction printer 4 installed in the office 2F is displayed on the display screen. FIG. 8 illustrates the display in a single multifunction printer and, in FIG. 9, it is possible to grasp the state of the power consumption of the multifunction printer on the basis of a unit of an installation place. Hence, in a case where the trend of the power consumption varies depending on the installation place, it is possible to set a power state that is suitable for a user who uses the multifunction printer in each installation place.

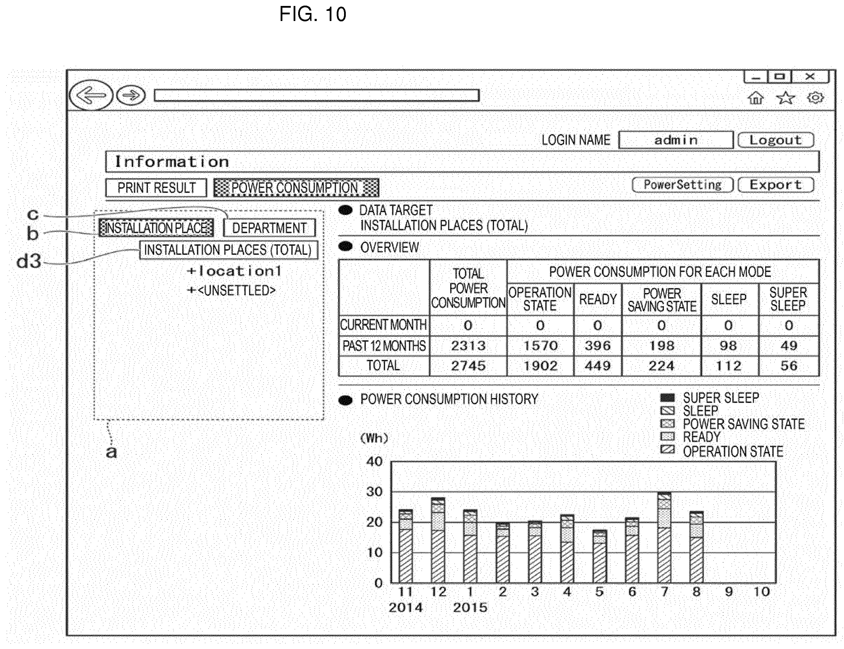

A display screen illustrated in FIG.10 is a display example of the power consumption for each power mode in the image forming apparatuses installed in all of the installation places.

In FIG. 10, a selection button d3 is a selection button for selecting an "installation places (total)" as the installation place of the multifunction printer. When the "installation places (total)" is selected by the selection button d3, the power consumption for each power mode in all of the multifunction printers, which can be controlled by the computer 3, is displayed on the display screen. Hence, for example, it is possible to use the selection of the selection button d3 in grasping a demand value that is used to grasp the power consumption on the basis of a company or office unit. In FIG. 10, only the multifunction printer is the display target of the power consumption. However, when it is possible to acquire the power consumption and the operation time of other devices, it is possible to manage, in the computer 3, amounts of power including an amount of the other devices.

A display screen illustrated in FIG.11 is a display example of the power consumption for each power mode in the image forming apparatuses on the basis of a department unit instead of an installation place unit.

It is possible to operate the selection button c alternative to the selection button b. When an operation is performed with the selection button c, the multifunction printers are classified and displayed for each department. For example, the multifunction printer 1, the multifunction printer 2, and the multifunction printer 3 are classified and displayed as a department 1. In addition, the multifunction printer 4, a multifunction printer 5, and a multifunction printer 6 are classified and displayed as a department 2. The departments are selected by the selection button c, and thereby it is easy to control the power consumption of the multifunction printer for each department that uses the multifunction printers.

For example, the multifunction printers can be configured such that the number of printed sheets is summed for each multifunction printer to bear a charge for use by each department that uses the multifunction printer. The power consumption is grasped for each department, and thereby the user can grasp the ratio also in the power charge for each multifunction printer. In FIG. 11, a selection button d4 that selects the department 1 is selected and the power consumption of the multifunction printer 3 of the department 1 is displayed.

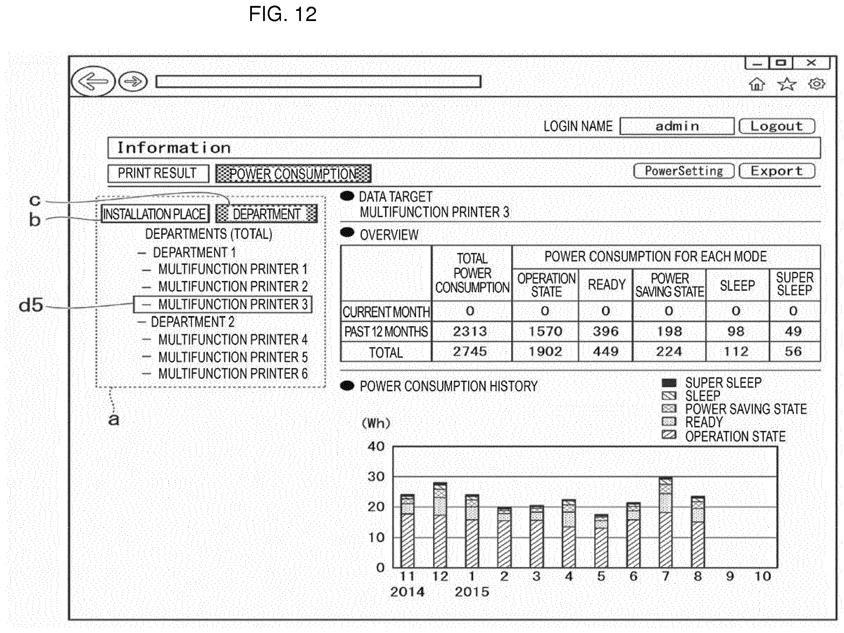

A display screen illustrated in FIG.12 is a display example of the power consumption for each power mode in one image forming apparatuses classified for each department.

When an operation is performed with a selection button d5, the multifunction printer 3 of the department 1 is selected. For example, in a case where rooms of a department are scattered at a plurality of places, the multifunction printers are classified and displayed for each department, and thereby it is easy to grasp the power consumption of the multifunction printers which are used in the corresponding department.

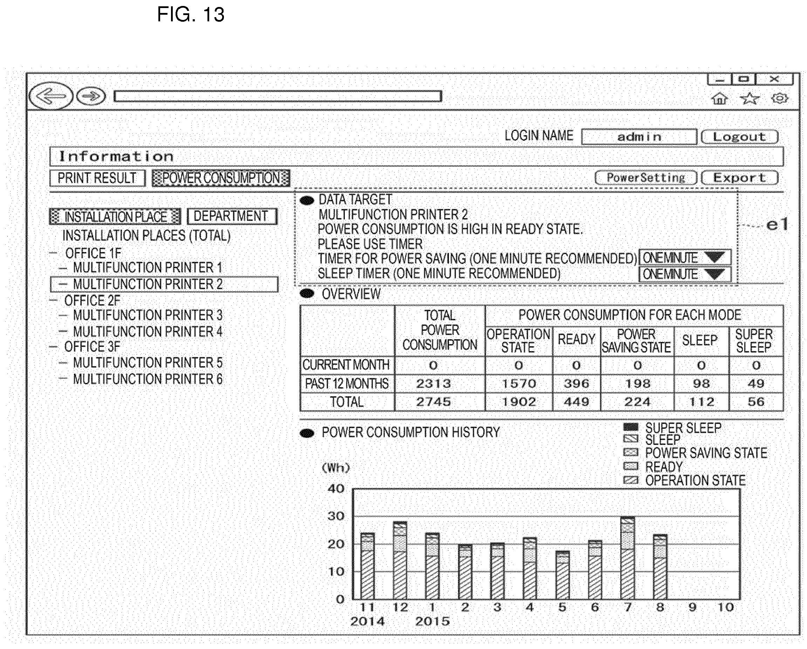

A display screen illustrated in FIG.13 is a display example of a recommendation function with respect to a result obtained by analyzing the displayed power consumption for each power mode.

Recommendation in response to the result obtained by analyzing the power consumption for each power mode and a setting screen corresponding to the recommendation are displayed on a recommendation display portion e1. For example, in a case where the power consumption in the ready state is higher than in the operation state, a notice indicating that the power consumption is higher in the ready state and a timer setting screen are displayed on the recommendation display portion e1. It is possible to set a period of time that is taken to perform the transition from the ready state to the power saving state or the sleep state on the timer setting screen. The power consumption calculating unit 103 may generate the recommendation that is displayed on the recommendation display portion e1. For example, the power consumption calculating unit 103 analyzes the calculated power consumption for each power mode and generates recommendation by selecting text that is displayed. The recommendation and the setting screen are together displayed, and thereby the user can easily perform setting optimal to the energy conservation.

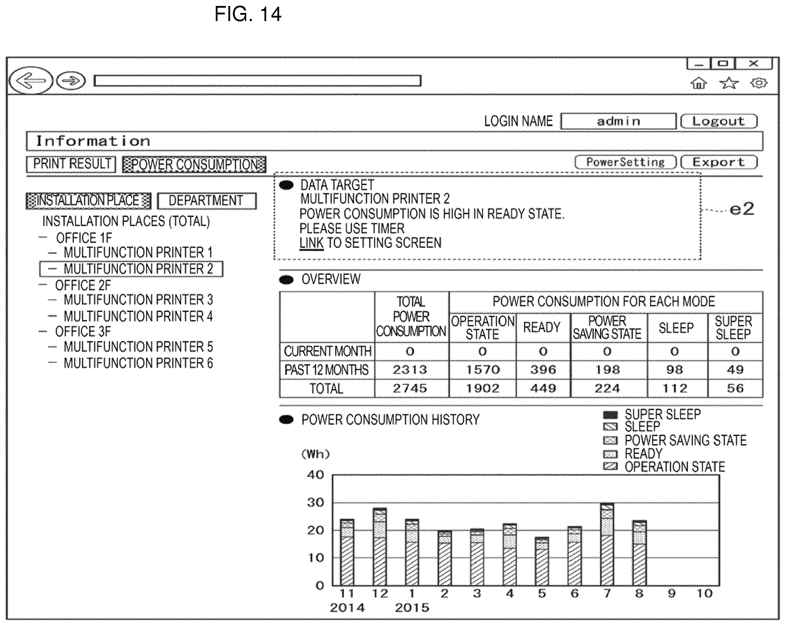

A display screen illustrated in FIG.14 is a display example of a recommendation function with respect to a result obtained by analyzing the displayed power consumption for each power mode.

Recommendation in response to the result obtained by analyzing the power consumption for each power mode and a link to a setting screen corresponding to the recommendation are displayed on a recommendation display portion e2. In a case where there are many setting items of the setting screen, or the like, the setting items cannot be all displayed on the display screen in FIG. 14 in some cases. Since the user can easily reach a dedicated setting screen through an operation on the link, it is possible to set a timer or the like that changes the transition conditions of the power modes.

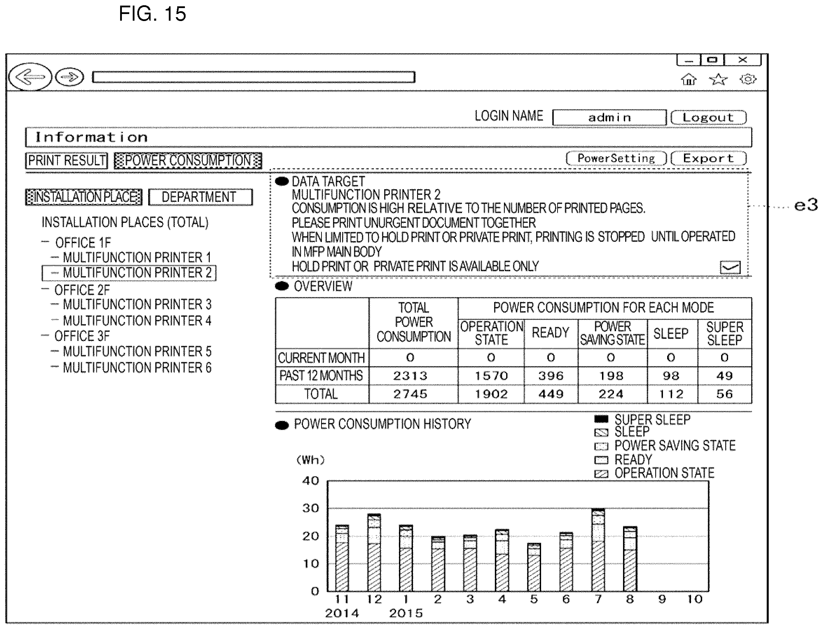

A display screen illustrated in FIG.15 is a display example of a recommendation function with respect to a result obtained by analyzing the displayed power consumption for each power mode.

Recommendation in response to the result obtained by analyzing the power consumption for each power mode and a setting screen corresponding to the recommendation are displayed on a recommendation display portion e3. For example, in a case where the power consumption is high relative to the number of printed pages, a setting in which hold print or private print is forced. The setting, in which hold print or the private print is forced, is displayed, for example, in a touch box.

The hold print is a print method in which a document that is to be printed is temporarily accumulated in a multifunction printer, and then printing is performed by designating the accumulated document from the operation unit of the multifunction printer. The private print is a print method in which a password is set to a document that is to be printed, the document is temporarily accumulated in the multifunction printer, the accumulated document is read with the set password from the operation unit of the multifunction printer, and printing is performed. In the hold print or the private print, a plurality of documents are designated and printed continuously, and thereby it is possible to reduce the number of transitions from the power saving state to the ready state and to achieve reduction in the power consumption.

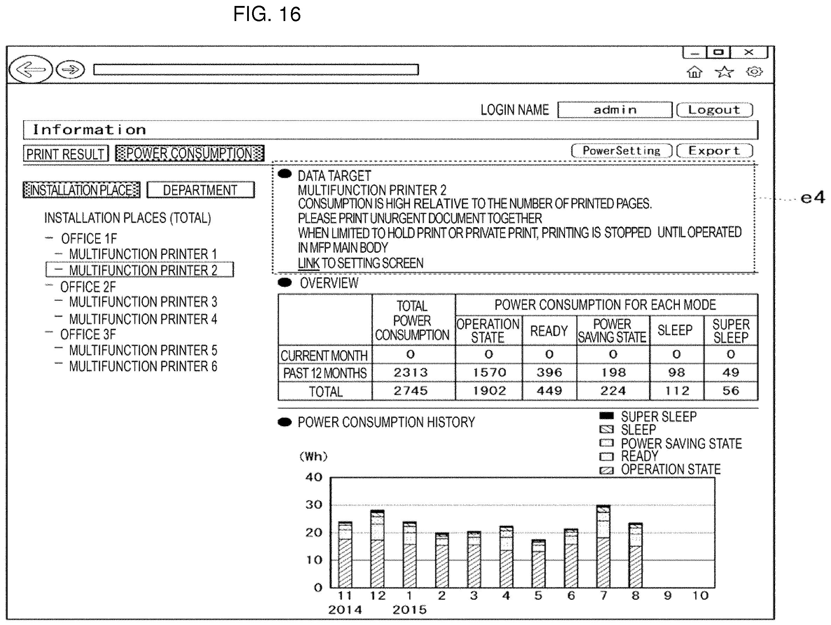

A display screen illustrated in FIG.16 is a display example of a recommendation function with respect to a result obtained by analyzing the displayed power consumption for each power mode.

Recommendation in response to the result obtained by analyzing the power consumption for each power mode and a link to a setting screen corresponding to the recommendation are displayed on a recommendation display portion e4. In a case where there are many setting items of the setting screen, or the like, similar to the link described in FIG. 14, the user easily reaches a dedicated setting screen through an operation on the link. Hence, the user can easily change printing conditions so as to achieve the energy conservation.

According to at least one embodiment described above, the image forming apparatus has a plurality of power modes which have different degrees of power consumption, and includes the estimate storing unit, the operation time totaling unit, and the power consumption outputting unit. The estimate storing unit stores the estimate of the power consumption set in advance for each power mode. The operation time totaling unit integrates periods of operation time for each power mode. The power consumption outputting unit outputs an actual amount of the power consumption for each power mode, based on the stored estimate and the period of total operation time.

While certain embodiments have been described these embodiments have been presented by way of example only, and are not intended to limit the scope of the inventions. Indeed, the novel embodiments described herein may be embodied in a variety of other forms: furthermore various omissions, substitutions and changes in the form of the embodiments described herein may be made without departing from the framework of the inventions. The accompanying claims and their equivalents are intended to cover such forms or modifications as would fall within the scope of the invention.

## Claims

1. An image forming apparatus that has a plurality of power modes which have different degrees of power consumption, the apparatus comprising:
an operation unit configured to receive input by a user;
a display unit configured to display power consumption data;
a network interface which connects to a computing device and is configured to transmit the power consumption data to the computing device;
a storage device configured to store an estimate of power consumption for each of the power modes; and
a processor configured to determine periods of operation time for each of the power modes and output to at least one of the display unit or the computing device an actual amount of the power consumption for each of the power modes, based on the stored estimates and the period of total operation time.

2. The apparatus according to claim 1, wherein the input by a user includes a request for changing the power mode.

3. The apparatus according to claim 1 or 2, wherein the power modes include one of operation state, ready state during which less power is consumed than the operation state, a power saving state during which less power is consumed than the ready state, a sleep state during which less power is consumed than the power saving state, and a super sleep state during which less power is consumed than the sleep state.

4. The apparatus according to any one of claims 1 to 3, wherein the processor is further configured to collect the power consumption data separately for each of the power modes.

5. The apparatus according to any one of claims 1 to 4, wherein the processor is further configured to detect a user input made through the operation unit to display the power consumption data and to output to the display unit the actual amount of the power consumption for each of the power modes in response to the user input.

6. The apparatus according to any one of claims 1 to 5, wherein the sleep state is a state in which it is possible to receive a fax, but other functions are stopped.

7. The apparatus according to any one of claims 1 to 6, wherein the super sleep state is a state in which it is possible to operate a key of the operation unit for transmission to another power mode.

8. A power management system comprising:
the image forming apparatus according to any one of claims 1 to 5 and a computer that is connected to the image forming apparatus via a network, wherein the computer includes
a display unit, and
a processor configured to calculate power consumption for each of the power modes, based on the estimates and the period of operation time acquired from the image forming apparatus and to control the display unit to display the calculated power consumption for each of the power modes.

9. A method for monitoring power usage of an image forming apparatus that has a plurality of power modes which have different degrees of power consumption, the method comprising:
storing, in the image forming apparatus, an estimate of power consumption for each of the power modes;
tracking, by the image forming apparatus, an operation time for each of the power modes;
computing, by the image forming apparatus, an actual amount of the power consumption for each of the power modes, based on the stored estimate and the period of total operation time; and
outputting, by the image forming apparatus, for display the actual amount of the power consumption for each of the power modes, based on the stored estimate and the period of total operation time.

10. The method of claim 9, wherein the image forming apparatus includes a display unit and the actual amount of the power consumption for each of the power modes is outputted to the display unit for display thereby.

11. The method of claim 9 or 10, wherein the image forming apparatus includes a network interface connected to a computing device and the actual amount of the power consumption for each of the power modes is outputted through the network interface to the computing device for display by a display unit of the computing device.

12. The method according to any one of claims 9 to 11, wherein the power modes include one of operation state, ready state during which less power is consumed than the operation state, a power saving state during which less power is consumed than the ready state, a sleep state during which less power is consumed than the power saving state, and a super sleep state during which less power is consumed than the sleep state.

13. The apparatus according to any one of claims 9 to 12, wherein the sleep state is a state in which it is possible to receive a fax, but other functions are stopped.

14. The apparatus according to any one of claims 9 to 13, wherein the super sleep state is a state in which it is possible to operate a key of the operation unit for transition to another power mode.
